# EUROPEAN PATENT APPLICATION

(11) **EP 4 749 467 A1**
(43) Date of publication of application: **27.05.2026**
(21) Application number: 25215872.0
(22) Date of filing: 14.11.2025
(51) Int. Cl.: G06F 12/1009, G06F 12/109

(54) **SYSTEM AND METHOD FOR MULTI-LINK CXL SWITCH FOR NUMA ARCHITECTURE**

(30) Priority: 20.11.2024 US 202463722849 P; 30.04.2025 US 202519195008
(71) Applicant: Samsung Electronics Co., Ltd., Suwon-si, Gyeonggi-do 16677 (KR)
(72) Inventor: PARK, Heekwon, San Jose, CA, 95134 (US); GIM, Jongmin, San Jose, CA, 95134 (US); JUNG, Jaemin, San Jose, CA, 95134 (US); GARG, Mukesh, San Jose, CA, 95134 (US); CHOI, Changho, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

A system and method for managing memory in a computing system are disclosed. The method includes generating (901) a virtual node by combining two or more physical nodes coupled to a compute express link, CXL, switch; and identifying (902) a physical address of data stored in the memory based on an offset between address ranges of the two or more physical nodes.

## Description

### TECHNICAL AREA

The present disclosure relates generally to memory management in non-uniform memory access (NUMA) architectures, and more particularly, to a system and method for employing a multi-link compute express link (CXL) switch to optimize memory access and resource allocation.

### BACKGROUND

NUMA architectures may be employed in high-performance computing systems to manage memory resources across multiple central processing unit (CPU) sockets. In such architectures, memory access latency may vary significantly depending on whether the memory being accessed is local to the CPU socket executing the process or resides in a remote socket. To address this variability, technologies such as CXL have been developed to facilitate high-speed, coherent access to memory resources across distributed systems.

A CXL host adapter may be connected to a CPU socket and interface with a CXL memory expander via a CXL switch. While this configuration provides scalability and efficient resource sharing, it can result in increased latency when a CPU socket accesses memory through a remote adapter. Such latency variations are particularly pronounced in workloads requiring frequent memory accesses, as the time taken to access remote memory may impact overall system performance.

To optimize memory access in NUMA architectures, it may be necessary to address challenges such as redundant memory exposure and efficient allocation of memory resources. These challenges are further complicated when multiple CXL host adapters are used to connect to the same CXL memory expander, resulting in overlapping memory regions being exposed to multiple physical nodes. Existing operating systems and memory management frameworks often do not adequately account for such redundancy, leading to inefficient resource utilization and potential conflicts.

It should be understood that the present background section is provided solely for the purpose of describing the general motivation and context of the invention. The discussion herein is intended to enhance understanding and should not be construed as an admission or acknowledgment of prior art.

### SUMMARY

Embodiments disclosed herein enable reduced latency in NUMA architectures using multi-link CXL switches. Virtual nodes and dynamic memory allocation provide efficient resource use, while inter-node migration maintains seamless memory access.

According to an embodiment, a method for managing memory in a computing system includes generating a virtual node by combining two or more physical nodes coupled to a CXL switch; and identifying a physical address of data stored in the memory based on an offset between address ranges of the two or more physical nodes.

According to another embodiment, an apparatus for managing memory in a computing system includes a CXL switch configured to couple two or more physical nodes, and a processor. The processor is configured to generate a virtual node by combining the two or more physical nodes; and identify a physical address of data stored in the memory based on an offset between address ranges of the two or more physical nodes.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 illustrates a CXL memory system, according to an embodiment;
FIG. 2 illustrates an enhanced CXL memory system, according to an embodiment;
FIG. 3A is a memory allocator and node management design, according to an embodiment;
FIG. 3B is an enhanced memory allocator and node management design, according to an embodiment;
FIG. 4 is a flowchart illustrating a node initialization process for a multi-link CXL architecture, according to an embodiment;
FIG. 5A is a memory allocator and node management design illustrating allocation of a page from physical memory, according to an embodiment;
FIG. 5B is an enhanced memory allocator and node management design illustrating allocation of a page from physical memory, according to an embodiment;
FIG. 6A is an enhanced memory allocator and node management design illustrating allocation of a page from physical memory, according to an embodiment;
FIG. 6B is a flowchart illustrating the role of a memory allocator while using a virtual node upon receiving a memory allocation request, according to an embodiment;
FIG. 7 is a diagram illustrating the use of unique address spaces to implement a CXL memory expander, according to an embodiment;
FIG. 8 is a diagram illustrating the use of multiple page table entries (PTEs) to manage memory allocation to support process migration, according to an embodiment;
FIG. 9 is a flowchart illustrating a method for managing memory in a computing system, according to an embodiment; and
FIG. 10 is a diagram illustrating a storage system, according to an embodiment.

### DETAILED DESCRIPTION

Hereinafter, embodiments of the present disclosure are described in detail with reference to the accompanying drawings. It should be noted that the same elements will be designated by the same reference numerals although they are shown in different drawings. In the following description, specific details such as detailed configurations and components are merely provided to assist with the overall understanding of the embodiments of the present disclosure. Therefore, it should be apparent to those skilled in the art that various changes and modifications of the embodiments described herein may be made without departing from the scope of the present disclosure. In addition, descriptions of well-known functions and constructions are omitted for clarity and conciseness. The terms described below are terms defined in consideration of the functions in the present disclosure, and may be different according to users, intentions of the users, or customs. Therefore, the definitions of the terms should be determined based on the contents throughout this specification.

The present disclosure may have various modifications and various embodiments, among which embodiments are described below in detail with reference to the accompanying drawings. However, it should be understood that the present disclosure is not limited to the embodiments, but includes all modifications, equivalents, and alternatives within the scope of the present disclosure.

Although the terms including an ordinal number such as first, second, etc. may be used for describing various elements, the structural elements are not restricted by the terms. The terms are only used to distinguish one element from another element. For example, without departing from the scope of the present disclosure, a first structural element may be referred to as a second structural element. Similarly, the second structural element may also be referred to as the first structural element. As used herein, the term "and/or" includes any and all combinations of one or more associated items.

The terms used herein are merely used to describe various embodiments of the present disclosure but are not intended to limit the present disclosure. Singular forms are intended to include plural forms unless the context clearly indicates otherwise. In the present disclosure, it should be understood that the terms "include" or "have" indicate existence of a feature, a number, a step, an operation, a structural element, parts, or a combination thereof, and do not exclude the existence or probability of the addition of one or more other features, numerals, steps, operations, structural elements, parts, or combinations thereof.

Unless defined differently, all terms used herein have the same meanings as those understood by a person skilled in the art to which the present disclosure belongs. Terms such as those defined in a generally used dictionary are to be interpreted to have the same meanings as the contextual meanings in the relevant field of art and are not to be interpreted to have ideal or excessively formal meanings unless clearly defined in the present disclosure.

The electronic device, according to one embodiment, may be one of various types of electronic devices utilizing storage devices. The electronic device may use any suitable storage standard, such as, for example, peripheral component interconnect express (PCIe), nonvolatile memory express (NVMe), NVMe-over-fabric (NVMeoF), advanced extensible interface (AXI), ultra path interconnect (UPI), ethernet, transmission control protocol/Internet protocol (TCP/IP), remote direct memory access (RDMA), RDMA over converged ethernet (ROCE), fiber channel (FC), infiniband (IB), serial advanced technology attachment (SATA), small computer systems interface (SCSI), serial attached SCSI (SAS), Internet wide-area RDMA protocol (iWARP), and/or the like, or any combination thereof. In some embodiments, an interconnect interface may be implemented with one or more memory semantic and/or memory coherent interfaces and/or protocols including one or more CXL protocols such as CXL.mem, CXL.io, and/or CXL.cache, Gen-Z, coherent accelerator processor interface (CAPI), cache coherent interconnect for accelerators (CCIX), and/or the like, or any combination thereof. Any of the memory devices may be implemented with one or more of any type of memory device interface including double data rate (DDR), DDR2, DDR3, DDR4, DDR5, low-power DDR (LPDDRX), open memory interface (OMI), NVlink high bandwidth memory (HBM), HBM2, HBM3, and/or the like. The electronic devices may include, for example, a portable communication device (e.g., a smart phone), a computer, a portable multimedia device, a portable medical device, a camera, a wearable device, or a home appliance. However, an electronic device is not limited to those described above.

The terms used in the present disclosure are not intended to limit the present disclosure but are intended to include various changes, equivalents, or replacements for a corresponding embodiment. With regard to the descriptions of the accompanying drawings, similar reference numerals may be used to refer to similar or related elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, terms such as "1st," "2nd," "first," and "second" may be used to distinguish a corresponding component from another component, but are not intended to limit the components in other aspects (e.g., importance or order). It is intended that if an element (e.g., a first element) is referred to, with or without the term "operatively" or "communicatively", as "coupled with," "coupled to," "connected with," or "connected to" another element (e.g., a second element), it indicates that the element may be coupled with the other element directly (e.g., wired), wirelessly, or via a third element.

As used herein, the term "module" may include a unit implemented in hardware, software, firmware, or combination thereof, and may interchangeably be used with other terms, for example, "logic," "logic block," "part," and "circuitry." A module may be a single integral component, or a minimum unit or part thereof, adapted to perform one or more functions. For example, according to one embodiment, a module may be implemented in a form of an application-specific integrated circuit (ASIC), a co-processor, or field programmable gate arrays (FPGAs).

Traditional NUMA architectures suffer from increased latency when accessing memory from remote CPU sockets. This limitation arises due to the lack of localized memory access paths and inefficient memory management across multiple nodes. CXL is an interconnect and protocol designed to provide high-speed, coherent access to memory and accelerators, enabling improved performance in distributed computing systems.

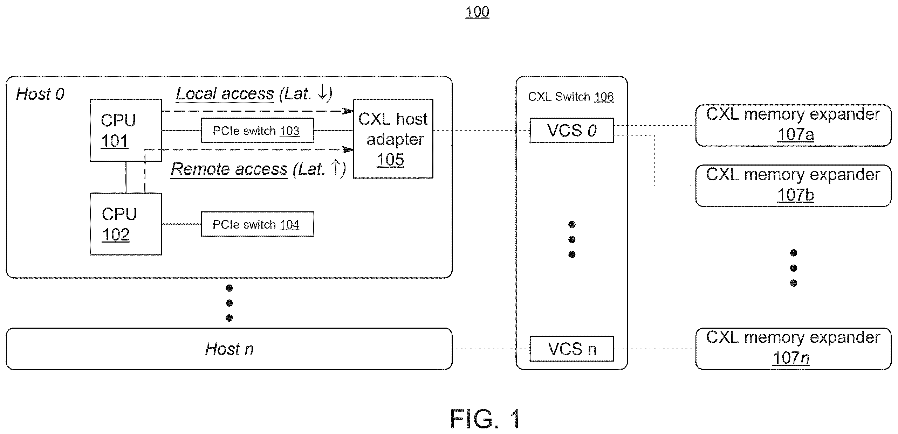

FIG. 1 illustrates a CXL memory system, according to an embodiment.

Referring to FIG. 1, the system 100 comprises two CPU sockets 101 and 102, two PCIe switches 103 and 104, and a CXL host adapter 105. The CXL host adapter 105 is connected to a shared CXL switch 106, which facilitates access to one or more CXL memory expanders 107a, 107b, and/or 107*n* using virtual CXL switch (VCS) units. VCS units may partition one or more CXL switches into virtual switches, allowing separate hosts to manage and access shared memory resources. This architecture enables both CPU sockets 101 and 102 to access the one or more CXL memory expanders 107a, 107b, and/or 107*n*, either through a local connection or via a remote socket connection.

FIG. 1 distinguishes between local and remote memory access paths. Local memory access occurs when a CPU socket directly communicates with its corresponding CXL host adapter to access the CXL memory expander through the shared CXL switch, resulting in reduced latency. Conversely, remote access occurs when a CPU accesses memory through the other socket's CXL host adapter, resulting in higher latency due to the additional interconnect traversal. Thus, CPU 101 may access the one or more CXL memory expanders 107a, 107b, and/or 107*n* through the CXL switch 106 and CXL host adapter 105 locally, since said components are downstream from CPU 101's PCle switch 103. Meanwhile CPU 102 can only access those same resources remotely, operating through CPU 101.

FIG. 1 illustrates the limitations of some architectures, where processes executing on one CPU socket (e.g., CPU 102) experience increased latency when accessing memory resources through a remote socket (e.g., CPU 101).

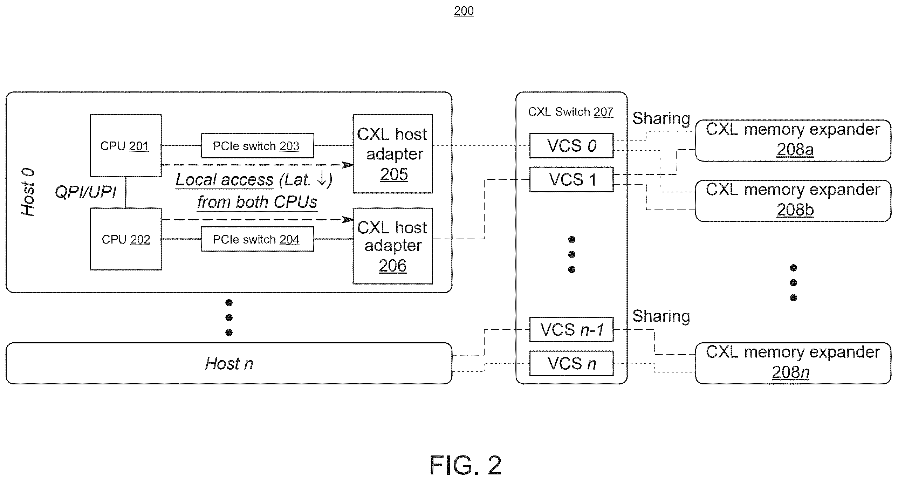

FIG. 2 illustrates an enhanced CXL memory system, according to an embodiment.

Referring to FIG. 2, the system 200 comprises two CPU sockets 201 and 202, two PCIe switches 203 and 204, and two CXL host adapters 205 and 206. The CXL host adapters 205 and 206 are connected to a shared CXL switch 207, which facilitates access to one or more CXL memory expanders 208*a*, 208b, and/or 208nusing VCS units. This architecture enables both CPU sockets to access the one or more CXL memory expanders 208a, 208b, and/or 208*n* through a local connection with low latency. That is, both CPUs 201 and 202 have their own respective CXL adapters 205 and 206 local to their own respective PCIe switches 203 and 204.

The CXL memory system 200 of FIG. 2 is enhanced with multi-link capabilities, where each CPU socket is equipped with a dedicated CXL host adapter. This configuration ensures that both CPU 201 and CPU 202 have local access to the one or more CXL memory expanders 208a, 208b, and/or 208*n* through the shared CXL switch 207. The system 200 may allow processes running on either CPU to access memory with reduced latency by routing the memory access through the local CXL host adapter.

The boxes labeled "VCS 0," "VCS 1," "VCS n-1," and "VCS n" in the CXL switch 207, along with the lines labeled "sharing" connecting them to one or more CXL memory expanders 208a, 208b and/or 208*n*, represent the concept of an enhanced VCS system to enable memory sharing in a multi-link CXL switch 207. A VCS unit may refer to a logical entity within the physical CXL switch that creates a separate memory hierarchy for each connected host, allowing each VCS unit to access its assigned CXL host adapter (e.g., 205, 206) independently as if it were directly attached to the host, isolating its memory space and providing efficient memory management across multiple systems (hosts or applications).

Like the VCS units shown in FIG. 1, these VCS units in FIG. 2 are logical entities within the CXL switch that facilitate the sharing of memory resources in the one or more CXL memory expanders 208a 208b, and/or 208*n*. However, in contrast to the VCS units depicted in FIG. 1, the VCS units in FIG. 2 are designed to facilitate efficient memory sharing among multiple CPUs 201 and 202 with the one or more CXL memory expanders 208a, 208b, and/or 208*n*. Unlike FIG. 1, where memory access may involve remote communication pathways, the architecture shown in FIG. 2 incorporates dedicated CXL host adapters 205 and 206 for each CPU 201 and 202, respectively, allowing each CPU 201 and 202 to establish a direct connection to a VCS unit within the CXL switch 207. This localized access mechanism enables each CPU 201 and 202 to retrieve memory directly (locally) from the one or more CXL memory expanders 208a, 208b, and/or 208*n* without unnecessarily having to use a remote connection pathway through a remote CXL host adapter. As a result, the system 200 in FIG. 2 significantly reduces or eliminates the latency associated with remote memory access.

The "sharing" lines in FIG. 2 indicate that the memory resources in the one or more CXL memory expanders 208a, 208b, and/or 208*n* are not statically assigned but are dynamically shared among the VCS units. This property enables multiple CPUs to directly (locally) access the same memory regions without creating conflicts or redundancies, using CXL's cache-coherent protocol to maintain data consistency.

By equipping both CPU sockets with CXL host adapters, the architecture of FIG. 2 minimizes dependency of CPUs using a remote CXL host adapter to access memory, and therefore reduces the likelihood of remote memory access, thereby improving latency overall. Additionally, the system 200 introduces mechanisms in the software layer to manage shared memory resources and prevent redundant memory exposure. This configuration may be scalable beyond multiple CPUs and supports the allocation and migration of memory resources across nodes.

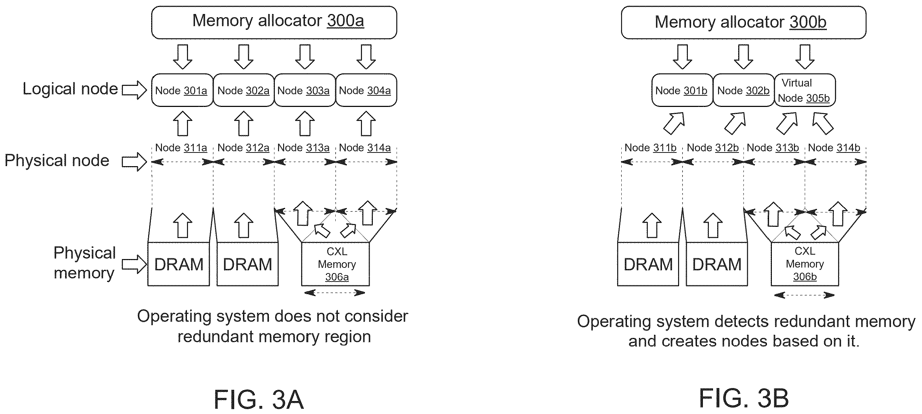

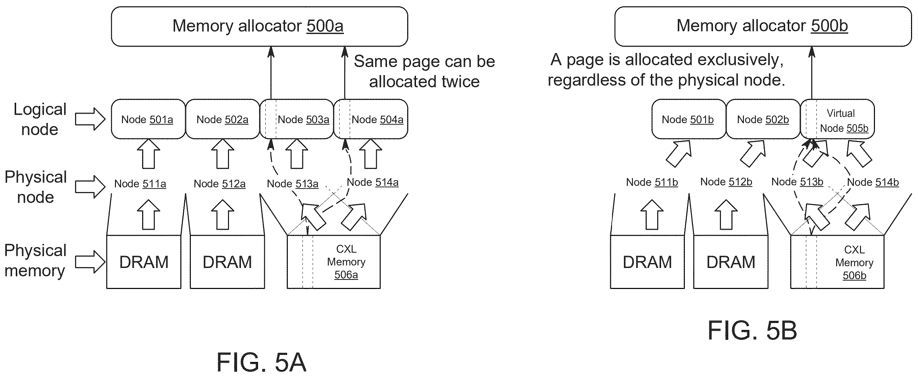

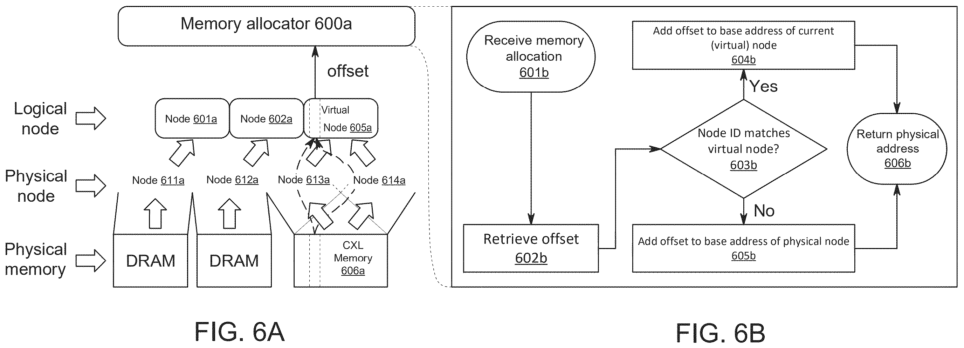

When two CXL host adapters (e.g., 205 and 206) connect to the same CXL memory expander e.g., (208a, 208b, or 208n), the memory may be redundantly exposed as multiple nodes with distinct physical addresses. This redundant exposure can complicate memory management and increase the potential for resource conflicts. To address this, a memory allocator may operate on a per-virtual node basis, consolidating redundant physical memory regions into a single virtual node. This virtual node abstraction may allow multiple physical nodes that reference the same underlying memory media to be managed as a unified entity. Accordingly, the term "physical node" (e.g., nodes 311a-314a in FIG. 3A, 311b-314b in. FIG. 3B, 511a-514a in FIG. 5A, 511b-514b in FIG. 5B, and nodes 611a-614a in FIG. 6A) refers to a mapping of a physical address range associated with a particular CXL host adapter. As discussed below with reference to FIG. 3A-3B, 5A-5B, and 6A, physical nodes may be a redundant representation of the same physical memory region, which can lead to inefficient memory allocation.

Another challenge arises during inter-node process migration. When a process is migrated from one node to another, the system may update the memory address to reflect the local node's memory map. Failure to update the address could result in the process accessing the memory through a remote node, introducing unnecessary latency and negating the benefits of the multi-link architecture.

The present disclosure introduces a method for advanced node and memory management by using virtual nodes. Virtual nodes may be logical entities to manage memory resources by combining or splitting physical nodes based on shared or overlapping memory regions. Virtual nodes can enable efficient memory allocation and prevent redundancy by treating multiple physical nodes with overlapping memory as a unified node in the logical memory map.

This method addresses challenges associated with redundant memory regions in multi-link CXL architectures, where multiple physical nodes may expose overlapping memory regions due to the presence of multiple CXL host adapters. By creating virtual nodes, the system can consolidate or divide physical nodes to manage memory resources logically and reduce redundancy.

FIG. 3A is a memory allocator and node management design, according to an embodiment.

Referring to FIG. 3A, in one approach to node management, the logical nodes 301a, 302a, 303a, and 304a may be mapped directly to physical nodes 311a, 312a, 313a, and 314a without considering redundant or overlapping memory regions. The logical node to physical node mapping may occur inside the CPU (e.g., CPU 201 or CPU 202 in FIG. 2).

As illustrated, four physical nodes 311a, 312a, 313a, and 314a correspond directly with logical nodes 301a, 302a, 303a, and 304a, respectively. The memory allocator 300a may operate independently for each logical node 301a, 302a, 303a, and 304a, which can result in redundant memory regions being managed separately.

However, physical nodes 313a and 314a both correspond to the same underlying CXL memory 306a (the term "CXL memory" may be used interchangeably with "CXL memory expander" and "CXL memory region"). Since logical nodes 303a and 304a are mapped 1:1 to physical nodes 313a and 314a, the memory allocator 300a independently and redundantly tracks logical node 303a and logical node 304a to manage what is physically a single shared CXL memory resource, represented by CXL memory 306a. For example, CXL memory 306a may include 64 GB of physical memory, yet appear to the memory allocator 300a as two separate 64 GB memory regions due to redundant exposure by physical nodes 313a and 314a. As a result, the memory may appear as 128 GB of total system memory, even though only 64 GB of physical memory is actually present. Consequently, the memory allocator 300a operating under this configuration may treat overlapping memory regions as memory regions with different physical addresses, causing inefficient memory utilization.

FIG. 3B is an enhanced memory allocator and node management design, according to an embodiment.

Referring to FIG. 3B, logical nodes 301b and 302b are directly mapped to physical nodes 311b and 312b, similar to the mapping of logical nodes 301a and 302a, and physical nodes 311a and 312a in FIG. 3A. However, unlike the approach in FIG. 3A, the memory allocator 300b in FIG. 3B identifies overlapping memory regions between physical nodes 313b and 314b and consolidates them into a single virtual node 305b. The virtual node 305b enables a host to manage access to the same CXL memory region through different address spaces associated with different CXL host adapters.

Specifically, the overlapping physical nodes 313b and 314b, which redundantly map to the same CXL memory region 306b, are combined into this single virtual node 305b. By introducing virtual node 305b, the memory allocator 300b manages the shared memory as a singular, unified resource. This prevents redundant memory allocations that occur when identical physical memory regions are managed independently, as illustrated in FIG. 3A.

Accordingly, in this embodiment, the memory allocator 300b can be reconfigured to manage virtual nodes (e.g., 305b) instead of logical nodes directly corresponding to physical nodes, which allows the system to treat overlapping memory regions as a unified entity.

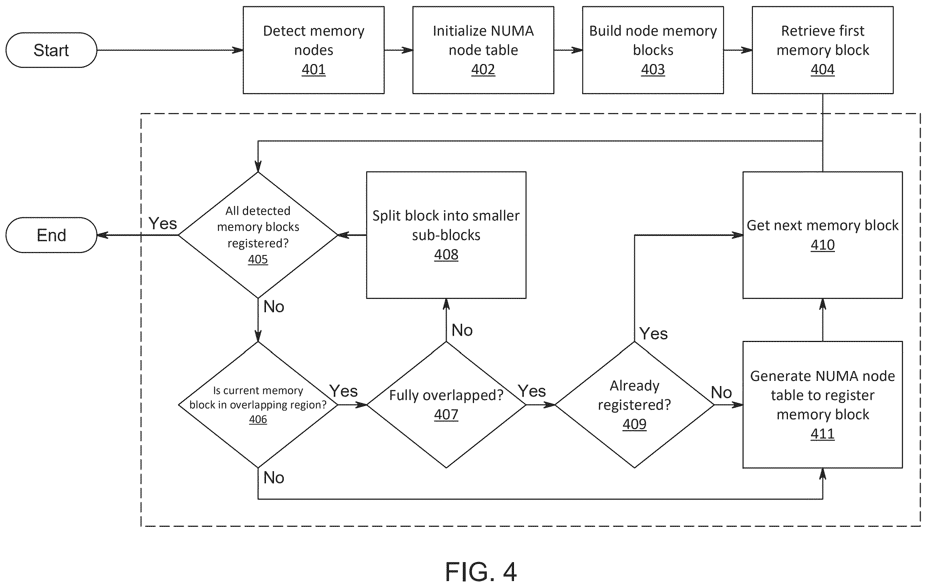

FIG. 4 is a flowchart illustrating a node initialization process for a multi-link CXL architecture, according to an embodiment.

Referring to FIG. 4, the process begins in step 401 with the system firmware, such as a basic input/output system (BIOS) or unified extensible firmware interface (UEFI), detecting the memory nodes available in the system. These firmware components can identify physical memory blocks and gather metadata regarding their configuration. In step 402, the system initializes a NUMA node table using platform-specific information provided by system tables such as the system resource affinity table (SRAT), system locality information table (SLIT), and/or CXL early discovery table (CEDT). These tables may provide details about the memory topology, locality, and interconnect relationships.

In step 403, the system builds a set of memory blocks that correspond to the physical nodes. Each block may represent a contiguous memory region that belongs to an individual physical node, and may correspond to an entire memory device or a subdivision of a memory region. In step 404, the first memory block is retrieved, and the system begins evaluating its status. A check is performed to determine whether all detected memory blocks have already been processed and registered in the NUMA node table in step 405. If all memory blocks are registered, the initialization process ends. However, if unprocessed memory blocks remain, in step 406, the system evaluates whether the current memory block resides in an overlapping region. Overlapping regions may occur when two or more physical nodes are mapped to the same physical memory region due to redundant CXL host adapter connections.

If an overlapping region is detected, in step 407, the system further examines whether the memory block is fully contained within the overlapping region. For blocks that are not entirely overlapped, in step 408, the system splits the block into smaller sub-blocks to enable more precise handling of the overlap. For blocks that are fully overlapped, in step 409, the system processes the block without further splitting and determines whether the memory block is already registered in the NUMA node table. If the block is already registered, in step 410, the system moves on to the next unprocessed memory block. If not, in step 411, the system creates a NUMA node table to register the memory block (e.g., associating virtual nodes with overlapping physical nodes). The system retrieves the next unprocessed memory block in step 411, and repeats this sequence of steps until all blocks are registered (Yes in step 405). Once all memory blocks are processed, the node initialization process concludes.

FIG. 5A is a memory allocator and node management design illustrating allocation of a page from physical memory, according to an embodiment.

Referring to FIG. 5A, in this configuration, each logical node 501a, 502a, 503a, and 504a maintains an independent data structure to track free memory pages within its boundaries. For instance, each of the logical nodes 501a-504a respectively correspond to the physical nodes 511a-514a, which may be mapped to the same physical memory (e.g., the same CXL memory region).

Much like the case in FIG. 3A, physical nodes 513a and 514a being mapped to the same CXL memory 506a in FIG. 5A results in redundant exposure of an identical or overlapping memory (a memory page in CXL memory 506a) since logical nodes 503a and 504a independently correspond to physical nodes 513a and 514a. In this case, the memory allocator 500a may treat the same memory page as though it exists at two different physical addresses, because the page in CXL memory 506a is accessible through distinct logical nodes that are each associated with a different physical address mapping. FIG. 5A illustrates this condition by showing that the same page is exposed to both logical nodes 503a and 504a.

This redundancy creates a challenge in memory management architecture. Because the memory allocator 500a lacks visibility into the overlapping nature of the mappings, it may allow two separate programs, operating on different logical nodes, to use the same physical memory page under the mistaken assumption that they are accessing distinct memory regions. Without any mechanism to detect or coordinate this overlap, the programs may each write to the same underlying memory, resulting in inconsistent state or memory corruption. The conflict arises because the same memory page is reachable through different physical address ranges, and the memory allocator 500a interprets these as independent when in fact they refer to the same shared resource.

FIG. 5B is an enhanced memory allocator and node management design illustrating allocation of a page from physical memory, according to an embodiment.

Referring to FIG. 5B, logical nodes 501b and 502b are directly mapped to physical nodes 511b and 512b, similar to the mapping of logical nodes 501a and 502a, and physical nodes 511a and 512a in FIG. 5A. However, unlike the approach in FIG. 5A, the memory allocator 500b in FIG. 5B identifies overlapping memory regions between physical nodes 513b and 514b and consolidates them into a single virtual node 505b.

Specifically, the overlapping physical nodes 513b and 514b, which redundantly map to the same page in CXL memory region 506b, are combined into this single virtual node 505b. By introducing virtual node 505b, the memory allocator 500b manages the shared memory as a singular, unified resource. This prevents redundant memory allocations that occur when identical pages are managed independently, as illustrated in FIG. 5A.

This enhanced design offers several advantages. By consolidating overlapping regions into virtual nodes, the system can prevent conflicts and reduce the complexity of memory management. This approach can be beneficial in a multi-link CXL system, where multiple CXL host adapters may expose overlapping regions of the CXL memory expander. The enhanced memory allocator can provide a scalable solution for high-performance computing systems that provides consistent and conflict-free memory allocation.

FIG. 6A is an enhanced memory allocator and node management design illustrating allocation of a page from physical memory, according to an embodiment.

Referring to FIG. 6A, reference numerals 600a, 601a, 602a, 605a, 611a, 612a, 613a, 614a, and 606a may respectively correspond to reference numerals 500b, 501b, 502b, 505b, 511b, 512b, 513b, 514b, and 506b in FIG. 5B, with similar descriptions and functionality applicable to these components.

Unlike some memory allocators that may return physical addresses directly, according to an embodiment of the present disclosure, the memory allocator can return an offset rather than a physical address when allocating memory from a virtual node. The offset may represent a position within the virtual node's address space and allow the system to determine the physical memory address based on the physical node where the process is running. For example, the memory allocator may add the base address of the physical node to the offset to compute the final physical address. Accordingly, this mechanism may ensure that memory allocated from a virtual node is accessible from more than one physical node mapped to the virtual node.

FIG. 6B is a flowchart illustrating the role of a memory allocator while using a virtual node upon receiving a memory allocation request, according to an embodiment.

Referring to FIG. 6B, the process begins in step 601b with receiving a memory allocation request that may specify a node identification (ID) and size. In step 602b, the allocator retrieves an offset for the requested memory from a node identified by the node ID and size. The allocator can manage free memory pages using offsets, meaning that a free list stores and returns offset values relative to a base address rather than full physical addresses. The free list may be used to keep track of available memory blocks and configured to return an offset value when a memory page is allocated.

In step 603b, the allocator then determines whether the node ID matches a virtual node. If the node ID matches a virtual node, in step 604b, the physical memory address is computed by adding the offset to the base address of the current virtual node (the node identified by the node ID and size). The node ID may represent the node where the process is running, so it does not necessarily need to be stored. Instead, metadata structures (e.g., struct node) can maintain information about virtual nodes, allowing the allocator to determine whether a given node ID corresponds to a virtual node.

If the node ID differs from a virtual node, in step 605b, the physical memory address is determined by adding the offset to the base address of the physical node. In step 606b, the allocator transmits the determined physical address to the requester, which can then update the page table entry (PTE) for the process. Stored data may then be retrieved using the determined physical address. Accordingly, by returning offsets rather than physical addresses, the system can maintain compatibility with processes running on different physical nodes.

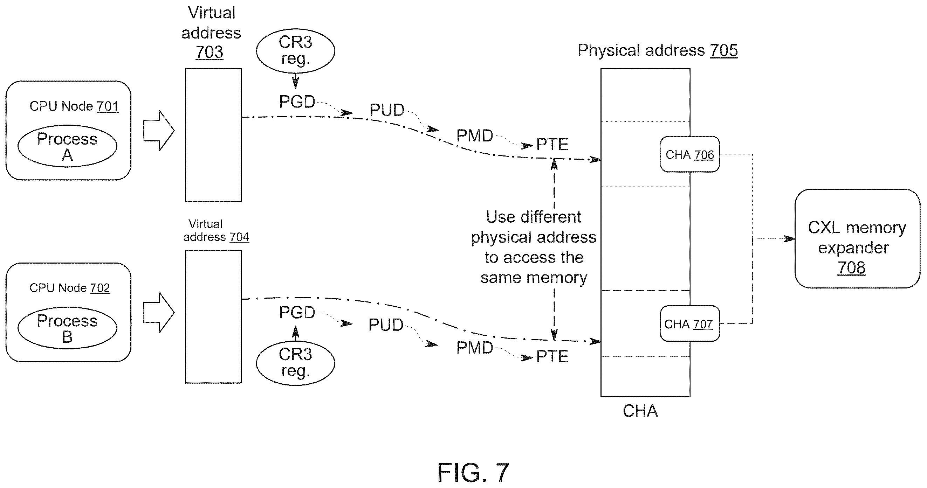

FIG. 7 is a diagram illustrating the use of unique address spaces to implement a CXL memory expander, according to an embodiment.

Referring to FIG. 7, each node, CPU node 701 and CPU node 702, corresponds to a process running on an associated CPU, represented as process A and process B, respectively. The memory management system may use virtual address 703 for process A and virtual address 704 for process B, each of which is mapped to physical addresses 705. These virtual addresses are resolved into physical addresses through a multi-level page table hierarchy that is managed by a memory management unit (MMU). This hierarchy, following a format such as that used in x86-64 architectures, may comprise a page global directory (PGD), page upper directory (PUD), page middle directory (PMD), and a PTE, which collectively resolve virtual addresses to physical addresses.

The PGD, PUD, PMD, and PTE form a hierarchical translation mechanism that progressively narrows the virtual address range. When a virtual address is accessed, the most significant bits of the virtual address are used to index into the PGD to locate the correct PUD. The PGD points to the PUD, which partitions the high-level virtual address space into manageable regions to help isolate large segments of memory across different processes. The PUD stores pointers to the PMD, which provides further granularity by enabling selection among smaller regions. The PMD determines which PTE table contains the final mapping for the virtual address. The PTE table is made up of smaller memory regions than the PMD, further improving granularity. In addition, the PMD also may serve as a control point for changing a path to a physical memory resource (e.g., CXL memory expander 708) without modifying the entire page table hierarchy (e.g., without modifying PGD and PUD).

For example, when a process is migrated from one CPU node to another, the underlying physical memory it accesses may remain the same (e.g., CXL memory expander 708), but the physical address used to reach that memory can be different depending on which CXL host adapter (CHA) is local to the node. Rather than rebuilding or rewriting the entire page table (PGD, PUD, PMD and PTE), the system can redirect translation by modifying the PMD entry to point to a different page table (a different PTE), which contains mappings that are valid for the new node's local CHA address space. As a result, the system requires fewer page table rewrites to access the same physical memory region across different CPU nodes. This redirection mechanism avoids address conflicts by ensuring that each CPU node accesses shared memory through a PTE page that reflects its local physical address space.

CHA 706 and CHA 707, may maintain a unique physical address space for the CXL memory expander 708. This allows overlapping memory regions in the CXL memory to be exposed differently to each node since each CXL host adapter is local to that node (e.g., CHA 706 is local to node 701 and CHA 707 is local to node 702). For instance, a memory region exposed to CHA 706 can be accessed through one physical address, while the same memory region exposed to CHA 707 can be accessed through a different physical address. This ensures that each node accesses memory through its local CXL host adapter, minimizing latency and optimizing performance.

This memory configuration ensures that each process uses the appropriate physical address corresponding to its local CXL host adapter. For example, process A running on node 701 resolves its virtual addresses to physical addresses exposed through CHA 706, while process B running on node 702 resolves its virtual addresses to physical addresses exposed through CHA 707. This approach avoids conflicts and ensures efficient memory access across nodes.

Additionally, FIG. 7 illustrates that the CR3 register, which is a system control register that includes the physical address of the page directory, in each node points to the base of the paging hierarchy, enabling the CPU to efficiently translate virtual addresses for each process.

Accordingly, FIG. 7 represents a scenario with two different processes A and B respectively running independently on two separate CPU nodes 701 and 702, each accessing a shared CXL memory expander 708. Process A and B both utilize distinct PTEs, which point to different physical address ranges corresponding to the same underlying CXL memory expander 708. Even though both process A and process B access the same physical memory, they do so using different addresses due to being exposed via separate host adapters (706 and 707). This arrangement allows processes running on separate CPU nodes to independently manage and access memory through localized paths

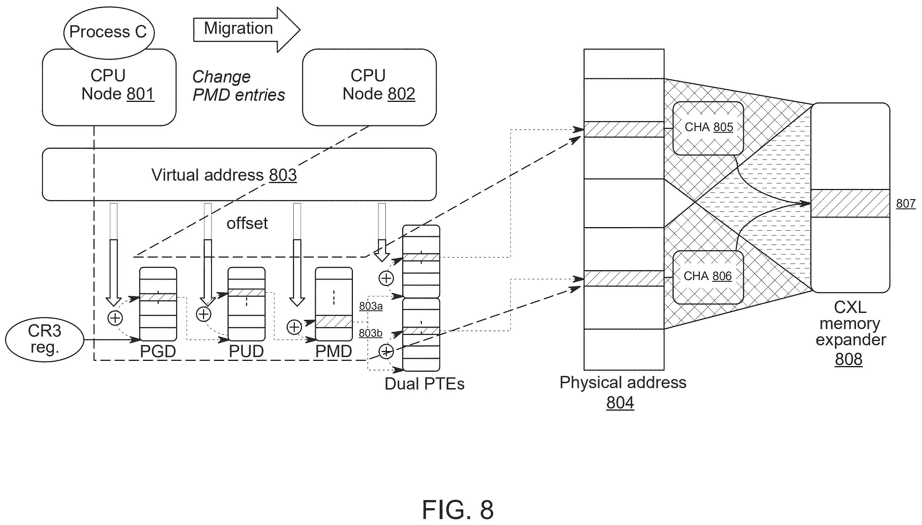

FIG. 8 is a diagram illustrating the use of PTEs to manage memory allocation to support process migration, according to an embodiment.

In contrast to FIG. 7, which shows two independent processes accessing shared CXL memory from separate CPU nodes 701 and 702, FIG. 8 illustrates a scenario in which a single process, process C, migrates from one CPU node 801 to another CPU node 802. To ensure that process C continues to access the same memory region via the local host adapter after migration, the system uses dual PTEs corresponding to the same memory page in the CXL memory expander 808 that are located at different physical addresses exposed by CHA 805 and CHA 806, respectively.

Referring to FIG. 8, a hierarchical paging structure is shown, consisting of a PGD, PUD, PMD, and multiple PTEs. These tables are managed by the MMU, which translates a virtual address 803 into a physical address 804. Translation proceeds in stages: the PGD provides a high-level partitioning of the virtual address space, with each entry referencing a PUD that further subdivides the address range. The PUD, in turn, points to a PMD table. The PMD then points to a PTE table that resolves the virtual address to a specific physical address.

In the example in FIG. 8, the system maintains dual PTEs. A base address of each of the PTEs are identified along paths 803a and 803b. The dual PTEs represent two separate address ranges corresponding to two different CXL host adapters, CHA 805 and CHA 806. These host adapters provide access to a shared memory region within CXL memory expander 808. Although the PTE pointed to by 803a and the PTE pointed to by 803b are made up of different physical address ranges, both ultimately map to the same physical memory page 807. CHA 805 is local to CPU node 801, while CHA 806 is local to CPU node 802.

To support CXL memory allocations, a pair of memory pages (e.g., totaling 8 KB) may be reserved for the last-level paging structure. This last-level structure may include PTEs for normal-sized 4 KB pages, PMDs for 2 megabyte (MB) large pages, and PUDs for 1 gigabyte (GB) very large pages. When a program allocates memory within the CXL memory expander 808, the relevant PTEs are initialized such that one entry (e.g., PTE from 803a) corresponds to the base address used by CHA 805, and the second entry (e.g., PTE from 803b) corresponds to the base address used by CHA 806. The second entry may be computed by applying a known offset between the two adapters' address ranges.

During execution, if process C migrates from CPU node 801 to CPU node 802, the system may update the corresponding PMD entry to reference the PTE that maps to the local CXL host adapter (e.g., CHA 805). This update may be triggered by detecting a change in the executing CPU node and may be carried out by adjusting the PMD entry to point to a new base address, such as by adding or subtracting a fixed offset (e.g., ±4 KB), such that the PMD entry points to reference path 803a instead of 803b. This redirection ensures that subsequent memory accesses issued by process C occur through the local adapter by isolating exposure to a physical address at the PTE level.

Thus, FIG. 8 demonstrates a migration-aware memory translation mechanism in which dual PTEs and dynamic PMD updates are used to maintain efficient access paths to shared memory. By aligning memory access with the node-local host adapter (CHA 806 in the post-migration case), the system reduces interconnect traffic, avoids remote memory accesses, and maintains coherence across CPU nodes using CXL's cache-coherent protocol.

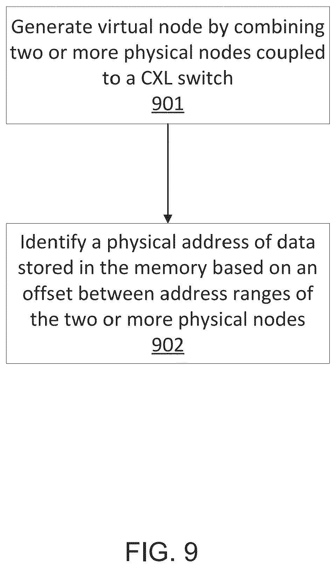

FIG. 9 is a flowchart illustrating a method for managing memory in a computing system, according to an embodiment.

The method shown in FIG. 9 may be implemented by a processor, memory controller, system-on-chip (SoC), or other processing unit capable of managing virtual memory. In some embodiments, the method is executed by system software (e.g., an operating system (OS)) running on a general-purpose CPU.

Referring to FIG. 9, in step 901, a virtual node is generated by combining two or more physical nodes that are coupled to a CXL switch. For example, a processor implementing the method may identify overlapping memory regions exposed to both nodes and assign them to a virtual node.

At step 902, a physical address of data stored in memory is identified based on an offset between the nodes' address ranges. This may be implemented by maintaining dual PTE pages, where the base address for the second node's mapping is derived by adding a fixed offset (e.g., ±4 KB) to the first. A PMD entry may be updated during execution to select a PTE page based on the executing CPU node.

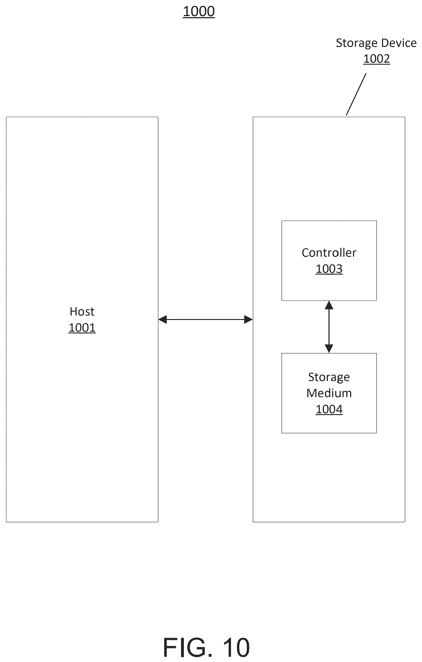

FIG. 10 is a diagram illustrating a storage system, according to an embodiment.

Referring to FIG. 10, a storage system 1000 includes a host 1001 and a storage device 1002. Although one host and one storage device are depicted, the storage system 1000 may include multiple hosts and/or multiple storage devices. The storage device 1002 may be a solid state drive (SSD), a universal flash storage (UFS), a hard disk drive (HDD), an embedded multimediacard (eMMC), a compactflash (CF) card, a secure digital (SD) card, etc. The storage device 1002 may include a controller (processor) 1003 and a storage medium 1004 connected to the controller 1003. The host 1001 and/or the storage device 1002 may include a CXL switch. The storage medium 1004 may include a volatile memory, a non-volatile memory, or both, and may include one or more flash memory chips (or other storage media). The controller 1003 may include one or more processors, one or more error correction circuits, one or more field programmable gate arrays (FPGAs), one or more host interfaces, one or more flash bus interfaces, etc., or a combination thereof. The controller 1003 may be configured to facilitate transfer of data/commands between the host 1001 and the storage medium 1004. The host 1001 may send data/commands to the storage device 1002 to be received by the controller 1003 and processed in conjunction with the storage medium 1004. As described herein, the methods, processes and algorithms may be implemented on a storage device controller, such as controller 1003.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Additionally or alternatively, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple compact disks (CDs), disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method for managing memory in a computing system, comprising:
generating (901) a virtual node (305b; 505b; 605a) by combining two or more physical nodes (313b, 314b; 513b, 514b; 613a, 614a) coupled to a compute express link, CXL, switch (106; 207); and
identifying (902) a physical address of data stored in the memory based on an offset between address ranges of the two or more physical nodes (313b, 314b; 513b, 514b; 613a, 614a).

2. The method of claim 1, wherein the two or more physical nodes (313b, 314b; 513b, 514b; 613a, 614a) expose a distinct address range that corresponds to a shared memory region (807) in a CXL memory expander (808).

3. The method of claim 2, further comprising maintaining a memory allocation table that associates one or more pages in the shared memory region (807) with the virtual node (305b; 505b; 605a).

4. The method of any one of claims 1 to 3, wherein the two or more physical nodes (313b, 314b; 513b, 514b; 613a, 614a) are coupled to the CXL switch (207) through two or more CXL host adapters (205, 206), respectively.

5. The method of any one of claims 1 to 4, further comprising updating a page middle directory, PMD, to point to a page table entry, PTE, when a process is migrated between central processing unit, CPU, nodes.

6. The method of any one of claims 1 to 4, further comprising updating a page middle directory, PMD, entry to point to a page table entry, PTE, associated with a base address corresponding to a local CXL host adapter when a process is migrated between central processing unit, CPU, nodes.

7. The method of any one of claims 1 to 4, further comprising selecting a page table entry, PTE, associated with a base address corresponding to a local CXL host adapter to manage access to a shared memory region.

8. An apparatus for managing memory in a computing system, comprising:
a compute express link, CXL, switch (106; 207) configured to couple two or more physical nodes (313b, 314b; 513b, 514b; 613a, 614a); and
a processor (1003) configured to:
generate a virtual node (305b; 505b; 605a) by combining the two or more physical nodes (313b, 314b; 513b, 514b; 613a, 614a); and
identify a physical address of data stored in the memory based on an offset between address ranges of the two or more physical nodes (313b, 314b; 513b, 514b; 613a, 614a).

9. The apparatus of claim 8, wherein the two or more physical nodes (313b, 314b; 513b, 514b; 613a, 614a) expose a distinct address range that corresponds to a shared memory region (807) in a CXL memory expander (808).

10. The apparatus of claim 8 or 9, wherein the offset is determined based on a difference in base addresses assigned to the two or more physical nodes (313b, 314b; 513b, 514b; 613a, 614a).

11. The apparatus of any one of claims 8 to 10, wherein the processor (1003) is further configured retrieve a memory page using the physical address.

12. The apparatus of any one of claims 8 to 11, wherein the processor (1003) is further configured to update a page middle directory, PMD, to point to a page table entry, PTE, when a process is migrated between central processing unit, CPU, nodes (801, 802).

13. The apparatus of any one of claims 8 to 11, wherein the processor (1003) is further configured to update a page middle directly, PMD, entry to point to a page table entry, PTE, associated with a base address corresponding to a local CXL host adapter (805, 806) when a process is migrated between central processing unit, CPU, nodes (801, 802).

14. The apparatus of any one of claims 8 to 11, wherein the processor (1003) is further configured to select a page table entry, PTE associated with a base address corresponding to a local CXL host adapter (801, 802) to manage access to a shared memory region (807).

15. The apparatus of any one of claims 8 to 14, wherein the data stored in the memory is accessed with a reduced latency compared to accessing the memory without the virtual node (305b; 505b; 605a).
